# EUROPEAN PATENT APPLICATION

(11) **EP 4 607 344 A1**
(43) Date of publication of application: **27.08.2025**
(21) Application number: 23887620.5
(22) Date of filing: 06.09.2023
(51) Int. Cl.: G06F 9/455

(54) **COMPUTING RESOURCE MANAGEMENT METHOD AND APPARATUS**

(30) Priority: 07.11.2022 CN 202211384838; 16.02.2023 CN 202310127283
(71) Applicant: Huawei Cloud Computing Technologies Co., Ltd., Guiyang, Guizhou 550025 (CN)
(72) Inventor: ZHAO, Dong, Guiyang, Guizhou 550025 (CN); MA, Xigang, Guiyang, Guizhou 550025 (CN); WANG, Kelun, Guiyang, Guizhou 550025 (CN)
(74) Representative: Goddar, Heinz J.
(86) International application number: PCT/CN2023/117151
(87) International publication number: WO 2024/098926

(57) **Abstract**

Embodiments of this application disclose a computing resource management method, to improve effect of computing resource management across different types of computing resource clusters. The method in embodiments of this application includes: A first level management platform receives a scale-out request sent by a second level management platform of a first cluster, where the scale-out request is used to request to add a computing resource needed for executing a first computing task. The first level management platform allocates a computing resource in a second cluster to the first computing task based on the scale-out request, and sends a scale-out response to the second level management platform of the first cluster, where the scale-out response indicates the first cluster to make a request for adding a computing resource from the second cluster, and the first cluster and the second cluster are different types of computing resource clusters.

## Description

This application claims priorities to Chinese Patent Application No. 202211384838.6, filed with the China National Intellectual Property Administration on November 7, 2022 and entitled "RESOURCE MANAGEMENT METHOD AND APPARATUS", and to Chinese Patent Application No. 202310127283.5, filed with the China National Intellectual Property Administration on February 16, 2023 and entitled "COMPUTING RESOURCE MANAGEMENT METHOD AND APPARATUS", both of which are incorporated herein by reference in their entireties.

### TECHNICAL FIELD

Embodiments of this application relate to the computer field, and in particular, to a computing resource management method and apparatus.

### BACKGROUND

With the development of cloud native technologies, more users have migrated applications to a Kubernetes cluster. However, in application scenarios of some customers, for example, a big data processing scenario, to ensure data security, a user still uses a resource in a Hadoop cluster built on a physical machine to perform task processing. Therefore, how to coordinate resources of the Kubernetes cluster and the Hadoop cluster to maximize resource utilization becomes an urgent problem to be resolved by enterprises.

In a current management process of a unified management platform of the Kubernetes cluster and the Hadoop cluster, the unified management platform directly creates an image file of the Hadoop cluster on a container of the Kubernetes cluster, and uses a computing resource of the Kubernetes cluster to execute a task. The computing resource is also managed on a management platform of the Kubernetes cluster.

Currently, the computing resource of the Kubernetes cluster cannot be shared by a plurality of big data platforms such as the Hadoop cluster, and a single task cannot be scheduled across the Kubernetes cluster and the Hadoop cluster. As a result, the unified management platform has poor effect on computing resource management, across different computing resource clusters, of the Kubernetes cluster and the Hadoop cluster.

### SUMMARY

Embodiments of this application provide a computing resource management method and apparatus, to improve effect of computing resource management across different computing resource clusters.

A first aspect of embodiments of this application provides a computing resource management method. The method is applied to a first level management platform of a computing resource system, the first level management platform is configured to manage different types of computing resource clusters, and the different types of clusters include at least two of the following: a container cluster, a virtual machine cluster, and a physical machine cluster. The computing resource system further includes a second level management platform, the second level management platform is configured to manage a computing resource in the computing resource cluster. The method provided in the first aspect includes: The first level management platform receives a computing scale-out request sent by a second level management platform of a first cluster, where the scale-out request is used to request to add a computing resource needed for executing a first computing task. The first level management platform allocates a computing resource in a second cluster to the first computing task based on the scale-out request, and sends a scale-out response to the second level management platform of the first cluster, where the scale-out response indicates the first cluster to make a request for adding a computing resource from the second cluster, and the first cluster and the second cluster are different types of computing resource clusters. The computing resource system executes the first computing task based on the first cluster and the second cluster.

In this embodiment of this application, the computing device cluster manages different types of computing resource clusters by using a two-level computing resource system. The first level management platform is configured to perform scaling management on different types of computing resource clusters, and the second level management platform is configured to manage a computing resource in the computing resource cluster. The first level management platform may simultaneously manage a plurality of computing resource clusters, in this way, a plurality of first clusters may share the computing resource of the second cluster, so that effect of computing resource management across different computing resource clusters is improved.

In a possible implementation, the computing resource cluster includes a Hadoop cluster and a container orchestration engine Kubernetes cluster. The second level management platform includes a management platform of the Hadoop cluster and a management platform of the Kubernetes cluster.

According to the two-level computing resource system provided in this embodiment of this application, a plurality of Hadoop clusters may share a computing resource of the Kubernetes cluster, so that effect of computing resource management across the Hadoop cluster and the Kubernetes cluster is improved.

In a possible implementation, the first level management platform obtains a remaining computing resource capacity of the second cluster, and the first level management platform determines the scale-out response based on the scale-out request, a resource scaling policy, and the remaining computing resource capacity, where the scale-out response indicates the first cluster to request a computing resource from the second cluster. The first level management platform sends the scale-out response to the second level management platform of the first cluster.

In this embodiment of this application, the first level management platform may send the scale-out response to the first cluster based on the scale-out request sent by the second level management platform of the first cluster, to indicate the first cluster to scale out the computing resource from the second cluster, so that a computing resource of the first cluster is scaled out, and computing resource utilization of the second cluster is improved.

In a possible implementation, the first level management platform receives a scale-in request sent by the second level management platform of the first cluster. In a process in which the first level management platform sends a computing resource response to the second level management platform of the first cluster based on a computing resource request and the resource scaling policy, the first level management platform determines a scale-in response based on the scale-in request and the resource scaling policy, where the scale-in response is used by the first cluster to make a request for releasing a computing resource from the second cluster. The first level management platform sends the scale-in response to the second level management platform of the first cluster.

In this embodiment of this application, the first level management platform may send the scale-in response to the first cluster based on the scale-in request sent by the second level management platform of the first cluster, to indicate the first cluster to make the request for releasing the computing resource from the second cluster, so that a scaled out computing resource of the second cluster is released in time, and computing resource utilization efficiency of the second cluster is improved.

In a possible implementation, when the computing resource cluster has been created, the first level management platform receives a takeover request of the second level management platform of the computing resource cluster. Alternatively, when the computing resource cluster has not been created, the first level management platform creates a computing resource cluster corresponding to the second level management platform.

In this embodiment of this application, the first level management platform may create one or more computing resource clusters for unified management, and may also receive a takeover request sent by a created computing resource cluster, to improve management effect of different computing resource clusters.

In a possible implementation, the first level management platform receives load monitoring information sent by the second level management platform, where the load monitoring information includes one or more of the following: central processing unit utilization, memory utilization, and disk utilization. The first level management platform determines a remaining computing resource capacity of each computing resource cluster based on the load monitoring information sent by the second level management platform.

In this embodiment of this application, the first level management platform may receive load monitoring information reported by second level management platforms of different computing resource clusters, and determine a remaining computing resource capacity of each computing resource cluster based on the load monitoring information, so that effect of scheduling computing resources of different computing resource clusters by the first level management platform is improved.

In a possible implementation, the computing resource system further includes a temporary data exchange service unit, and the computing resource cluster corresponding to the second level management platform stores, in the temporary data exchange service unit, temporary data generated during execution of the computing task. Specifically, the temporary data exchange service unit may store temporary data generated by the Hadoop cluster and the Kubernetes cluster, to avoid dependency of the Kubernetes cluster on a local disk.

In this embodiment of this application, the computing resource system stores, by using the temporary data exchange service unit, temporary data generated by different computing resource clusters. This avoids dependency of a computing resource cluster (for example, the Kubernetes cluster) that does not include a local disk on the local disk, to reduce costs of the computing resource cluster.

A second aspect of embodiments of this application provides a computing resource management method. The method is applied to a second level management platform of a computing resource system. The second level management platform is configured to manage a computing resource in a computing resource cluster. The computing resource system further includes a first level management platform. The first level management platform is configured to manage different types of computing resource clusters, and the different types of clusters include at least two of the following: a container cluster, a virtual machine cluster, and a physical machine cluster. The method provided in the second aspect includes: A second level management platform of a first cluster sends a scale-out request to the first level management platform, where the scale-out request is used to request to add a computing resource needed for executing a first computing task. The second level management platform of the first cluster receives a scale-out response sent by the first level management platform, where the scale-out response indicates the first cluster to make a request for adding a computing resource from a second cluster, and the first cluster and the second cluster are different types of computing resource clusters.

In this embodiment of this application, the second level management platform of the first cluster may request a computing resource from the second cluster based on the scale-out response sent by the first level management platform, so that the first cluster may use the computing resource in the second cluster. In addition, the first level management platform may simultaneously manage a plurality of computing resource clusters, in this way, a plurality of first clusters share the computing resource of the second cluster, so that effect of computing resource management across different computing resource clusters is improved.

In a possible implementation, the second level management platform of the first cluster receives node monitoring information sent by a computing node in the second cluster, where the node monitoring information includes one or more of the following: central processing unit utilization, memory utilization, and disk utilization.

In this embodiment of this application, after the first cluster makes a request for scaling out or scaling in the computing resource from the second cluster, the second level management platform of the first cluster receives the node monitoring information sent by the computing node in the second cluster, to determine load monitoring information of the first cluster after the scale-out or scale-in, to improve accuracy of collecting statistics on the load monitoring information by the first cluster.

In a possible implementation, after the second level management platform of the first cluster receives a computing resource response sent by the first level management platform, the second level management platform of the first cluster makes, based on the computing resource response, a request for scaling out or releasing the computing resource from the second cluster.

In this embodiment of this application, after receiving the computing resource response sent by the first level management platform, the second level management platform of the first cluster may make a request for scaling out or releasing a computing resource from the second cluster, to improve task processing efficiency of the computing resource system.

In a possible implementation, the first cluster determines, according to a resource scheduling policy, a computing resource for executing the computing task, where the computing resource includes a computing resource in the first cluster and a computing resource in the second cluster, and the resource scheduling policy includes one or more of the following: a default resource pool policy, a random policy, a round robin policy, a maximum available resource policy, a priority policy, and a heuristic policy.

In this embodiment of this application, the first cluster determines, according to the plurality of resource scheduling policies, the computing resource for executing the computing task, to improve efficiency of the execution of the computing task.

A third aspect of embodiments of this application provides a computing resource management apparatus, used in a first level management platform in a management system of a computing resource. The computing resource is configured to execute a big data computing task, the computing resource includes a plurality of computing resource clusters, the first level management platform is configured to manage the plurality of computing resource clusters, the plurality of computing resource clusters include a plurality of types of clusters, and the plurality of types of clusters include at least two of the following: a container cluster, a virtual machine cluster, and a physical machine cluster. The management system further includes a second level management platform, the second level management platform is configured to manage a computing resource in each computing resource cluster, and the plurality of computing resource clusters include a first cluster and a second cluster. The management apparatus includes a transceiver unit and a processing unit.

The transceiver unit is configured to receive a scale-out request sent by a second level management platform of the first cluster, where the scale-out request is used to request to add a computing resource needed for executing a first computing task. The processing unit is configured to allocate a computing resource in the second cluster to the first computing task based on the scale-out request. The transceiver unit is further configured to send a scale-out response to the second level management platform of the first cluster, where the scale-out response indicates the first cluster to make a request for adding a computing resource from the second cluster, and the first cluster and the second cluster are different types of computing resource clusters.

In a possible implementation, the computing resource cluster includes a Hadoop cluster and a container orchestration engine Kubernetes cluster.

In a possible implementation, the processing unit is specifically configured to obtain a remaining computing resource capacity of the second cluster; and determine the scale-out response based on the scale-out request, a resource scaling policy, and the remaining computing resource capacity, where the scale-out response indicates the first cluster to request a computing resource from the second cluster. The transceiver unit is specifically configured to send the scale-out response to the second level management platform of the first cluster.

In a possible implementation, the transceiver unit is further configured to receive a scale-in request sent by the second level management platform of the first cluster. The processing unit is further configured to determine a scale-in response based on the scale-in request and the resource scaling policy, where the scale-in response is used by the first cluster to make a request for releasing a computing resource from the second cluster. The transceiver unit is further configured to send the scale-in response to the second level management platform of the first cluster.

In a possible implementation, the transceiver unit is further configured to receive a takeover request of the second level management platform, or the processing unit is further configured to create a computing resource cluster corresponding to the second level management platform.

In a possible implementation, the first level management platform receives load monitoring information sent by the second level management platform, where the load monitoring information includes one or more of the following: central processing unit utilization, memory utilization, and disk utilization.

A fourth aspect of embodiments of this application provides a computing resource management apparatus. The management apparatus is used in a second level management platform in a management system of a computing resource. The computing resource includes a plurality of computing resource clusters, the second level management platform is configured to manage a computing resource in each computing resource cluster, the plurality of computing resource clusters include a plurality of types of clusters, and the plurality of types of clusters include at least two of the following: a container cluster, a virtual machine cluster, and a physical machine cluster. The management system further includes a first level management platform. The first level management platform is configured to manage a plurality of computing resource clusters. The plurality of computing resource clusters include a first cluster and a second cluster. The management apparatus includes a transceiver unit and a processing unit.

The transceiver unit is configured to send a scale-out request to the first level management platform, where the scale-out request is used to request to add a computing resource needed for executing a first computing task. The transceiver unit is further configured to receive a scale-out response sent by the first level management platform, where the scale-out response indicates the first cluster to make a request for adding a computing resource from the second cluster, and the first cluster and the second cluster are different types of computing resource clusters.

In a possible implementation, the computing resource system further includes a temporary data exchange service unit, and the transceiver unit is further configured to store, in the temporary data exchange service unit, temporary data generated during execution of the first computing task.

In a possible implementation, the transceiver unit is further configured to receive node monitoring information sent by a computing node in the second cluster, where the node monitoring information includes one or more of the following: central processing unit utilization, memory utilization, and disk utilization.

In a possible implementation, the processing unit is configured to determine, according to a resource scheduling policy, a computing resource for executing the first computing task, where the computing resource includes a computing resource in the first cluster and a computing resource in the second cluster, and the resource scheduling policy includes one or more of the following: a default resource pool policy, a random policy, a round robin policy, a maximum available resource policy, a priority policy, and a heuristic policy.

A fifth aspect of embodiments of this application provides a computing device cluster. The computing device cluster includes one or more computing devices. The computing device includes a processor, the processor is coupled to a memory, and the processor is configured to store instructions. When the instructions are executed by the processor, the computing device cluster is enabled to perform the method in any one of the first aspect or the possible implementations of the first aspect, or the computing device cluster is enabled to perform the method in any one of the second aspect or the possible implementations of the second aspect.

A sixth aspect of embodiments of this application provides a computer-readable storage medium, where the computer-readable storage medium stores instructions, and when the instructions are executed, a computer is enabled to perform the method in any one of the first aspect or the possible implementations of the first aspect, or a computer is enabled to perform the method in any one of the second aspect or the possible implementations of the second aspect.

A seventh aspect of embodiments of this application provides a computer program product, where the computer program product includes instructions, and when the instructions are executed, a computer is enabled to implement the method in any one of the first aspect or the possible implementations of the first aspect, or a computer is enabled to implement the method in any one of the second aspect or the possible implementations of the second aspect.

It may be understood that, for beneficial effect that can be achieved by any computing device cluster, any computer-readable medium, any computer program product, or the like provided above, refer to beneficial effect in the corresponding method. Details are not described herein again.

### BRIEF DESCRIPTION OF DRAWINGS

FIG. 1 is a diagram of a system architecture of a computing resource system according to an embodiment of this application;
FIG. 2 is a diagram of a computing resource management method according to an embodiment of this application;
FIG. 3 is a schematic of another computing resource management method according to an embodiment of this application;
FIG. 4 is a diagram of another computing resource management method according to an embodiment of this application;
FIG. 5 is a schematic of another computing resource management method according to an embodiment of this application;
FIG. 6 is a diagram of scaling out a computing resource according to an embodiment of this application;
FIG. 7 is a diagram of scaling in a computing resource according to an embodiment of this application;
FIG. 8 is a diagram of another computing resource management method according to an embodiment of this application;
FIG. 9 is a diagram of computing resource pool division according to an embodiment of this application;
FIG. 10 is a diagram of another computing resource management method according to an embodiment of this application;
FIG. 11 is a diagram of another computing resource management method according to an embodiment of this application;
FIG. 12 is a diagram of a management apparatus according to an embodiment of this application;
FIG. 13 is a diagram of a structure of a computing device according to an embodiment of this application;
FIG. 14 is a diagram of a computing device cluster according to an embodiment of this application; and
FIG. 15 is a diagram of another computing device cluster according to an embodiment of this application.

### DESCRIPTION OF EMBODIMENTS

Embodiments of this application provide a computing resource management method and apparatus, to improve effect of computing resource management across different computing resource clusters.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner.

With reference to the accompanying drawings, the following describes a computing resource management method and apparatus provided in embodiments of this application.

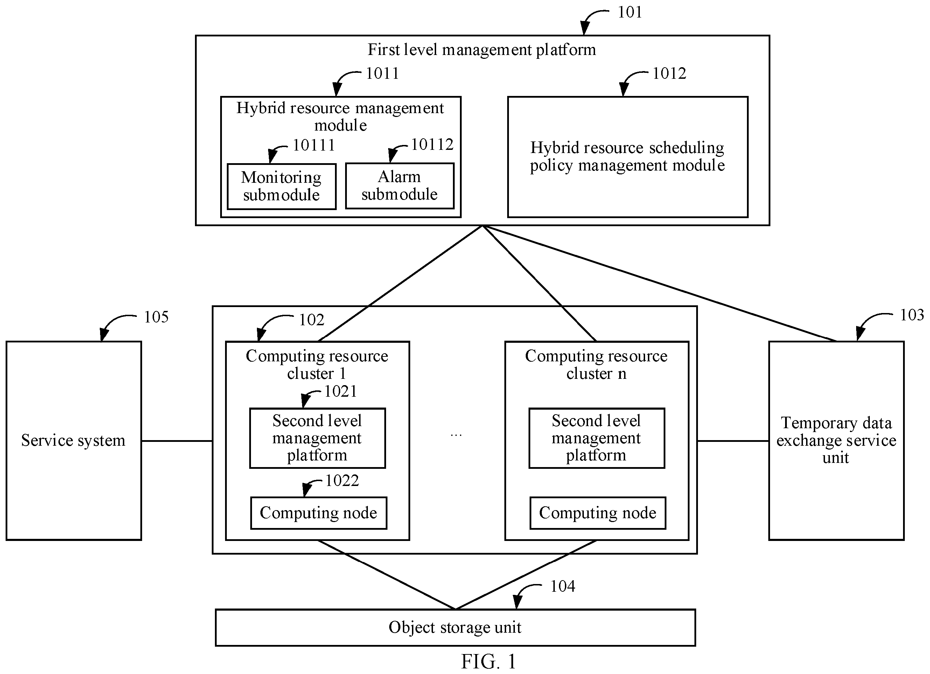

FIG. 1 is a diagram of a system architecture to which a computing resource management method is applied according to an embodiment of this application. As shown in FIG. 1, a computing resource system 100 includes a first level management platform 101, a computing resource cluster 102, a temporary data exchange service unit 103, an object storage unit 104, and a service system 105. The first level management platform 101 includes a hybrid resource management module 1011 and a hybrid resource scheduling policy management module 1012, the computing resource cluster 102 includes a second level management platform 1021 and a computing node 1022 that correspond to the computing resource cluster. The following describes specific functions of parts of the computing resource system.

The first level management platform 101 is also referred to as a unified operation and maintenance management platform, and is configured to manage a global computing resource cluster. The first level management platform 101 may be deployed on an independent server, and communicate with each subsystem to perform cross-computing resource cluster management. Each subsystem includes different types of computing resource clusters 102 and the temporary data exchange service unit 103.

The first level management platform 101 includes the hybrid resource management module 1011 and the hybrid resource scheduling policy management module 1012. The hybrid resource management module 1011 includes a monitoring submodule 10111 and an alarm submodule 10112. The monitoring submodule 10111 is configured to obtain load monitoring information and health status information of subsystems such as the plurality of computing resource clusters 102 and the temporary data exchange service unit 103, and the alarm submodule 10112 is configured to generate an alarm based on the load monitoring information and the health status information of the subsystem.

The hybrid resource scheduling policy management module 1012 is configured to configure a scaling policy of a computing resource and perform scaling policy management of a hybrid computing resource. Specifically, the hybrid resource scheduling policy management module 1012 may configure another computing resource cluster that can be used by the computing resource cluster and a use priority. The hybrid resource scheduling policy management module 1012 may further configure scaling conditions of the scaling policy of the computing resource. The scaling conditions of the scaling policy of the computing resource include time-based scaling, load-based scaling, and immediate scaling.

The computing resource cluster 102 is deployed, in a cluster form, on a server, and is configured to execute a computing task sent by the service system 105. The computing resource cluster 102 includes different types of computing resource clusters, and the different types of computing resource clusters include at least two of the following: a container cluster, a virtual machine cluster, and a physical machine cluster. The physical machine cluster is, for example, a Hadoop cluster, and the container cluster is, for example, a Kubernetes cluster.

The second level management platform 1021 is configured to be responsible for computing resource management and fault recovery inside the computing resource cluster. Different computing resource clusters 102 have respective corresponding second level management platforms. For example, a second level management platform corresponding to the Hadoop cluster is a Hadoop cluster management platform, and a second level management platform corresponding to the Kubernetes cluster is a Kubernetes cluster management platform. The Hadoop cluster is deployed on a server, and may be deployed independently, or may be deployed on a same server with another Hadoop cluster. This is not specifically limited. The Kubernetes cluster may also be deployed, in a cluster form, on a server and does not need to carry a local disk.

In a hybrid computing resource scheduling scenario, the second level management platform 1021 is further configured to: initiate a computing resource scaling request to the first level management platform 101, and perform computing resource scaling processing across computing resource clusters based on a computing resource scaling response of the first level management platform 101.

The computing node 1022 is a computing resource in the computing resource cluster 102, and is configured to execute a computing task allocated by the second level management platform 1021.

The temporary data exchange service unit 103 is configured to store temporary data generated in a process of executing a computing task by different computing resource clusters 102. The temporary data exchange service unit 103 may be deployed, in a cluster form, on a server having a local memory, and the temporary data exchange service unit 103 can remove dependency of the computing resource cluster 102 on a local disk.

The object storage unit 104 is deployed, in a cluster form, on a server, and is configured to store log data archived in a process of executing the computing task by the different computing resource clusters 102. For example, a big data computing service started in the Kubernetes cluster may write running log data into the object storage unit 104.

The service system 105 is configured to send a computing task to the computing resource cluster 102. The service system 105 includes one or more service systems: a large-scale data set computing service MapReduce service system, a computing engine spark service system, a distributed processing engine flink service system, and a computing engine tez service system.

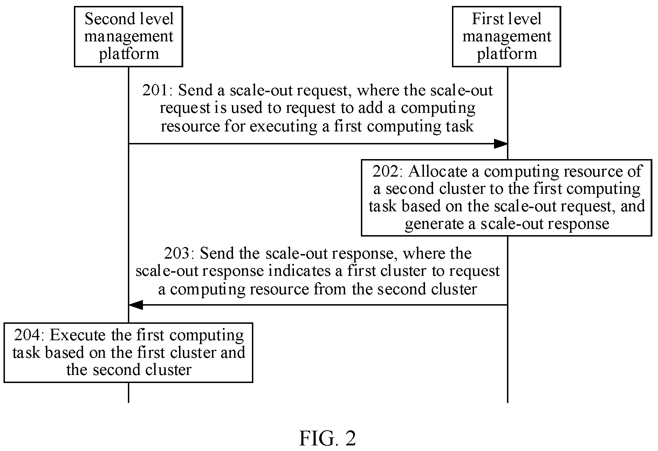

With reference to FIG. 2, the following describes a computing resource management method provided in an embodiment of this application.

FIG. 2 is a schematic flowchart of a computing resource management method according to an embodiment of this application. In an example shown in FIG. 2, the computing resource management method provided in this embodiment of this application includes the following steps.

201: A first level management platform receives a scale-out request sent by a second level management platform.

The first level management platform receives the scale-out request sent by the second level management platform, where the scale-out request is used to request to add a computing resource needed for executing a first computing task. The second level management platform includes second level management platforms corresponding to a plurality of different types of computing resource clusters, and the second level management platforms are configured to manage computing resources in the respective computing resource clusters. The different types of computing resource clusters include at least two of the following: a container cluster, a virtual machine cluster, and a physical machine cluster. For example, a first cluster and a second cluster are different computing resource clusters, the first cluster is a physical machine cluster, and the second cluster is a container cluster.

In a possible implementation, the computing resource cluster includes a Hadoop cluster and a container orchestration engine Kubernetes cluster, and the second level management platform includes a Hadoop cluster management platform and a Kubernetes cluster management platform.

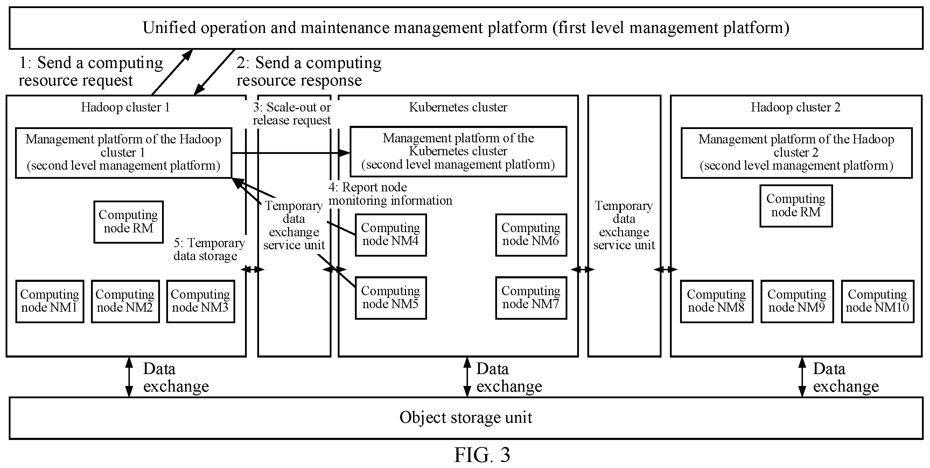

FIG. 3 is a diagram of another computing resource management method according to an embodiment of this application. In step 1 of an example shown in FIG. 3, a management platform of a Hadoop cluster 1 sends a computing resource request to a unified operation and maintenance platform, where the computing resource request is used to request the unified operation and maintenance management platform to scale out or scale in a computing resource needed by the Hadoop cluster 1 to execute a computing task, that is, the management platform of the Hadoop cluster 1 requests the unified operation and maintenance platform to scale out or scale in the computing resource in the Hadoop cluster 1.

In a possible implementation, before the first level management platform receives the scale-out request sent by the second level management platform, the first level management platform receives a takeover request sent by the second level management platform, or the first level management platform creates a computing resource cluster corresponding to the second level management platform.

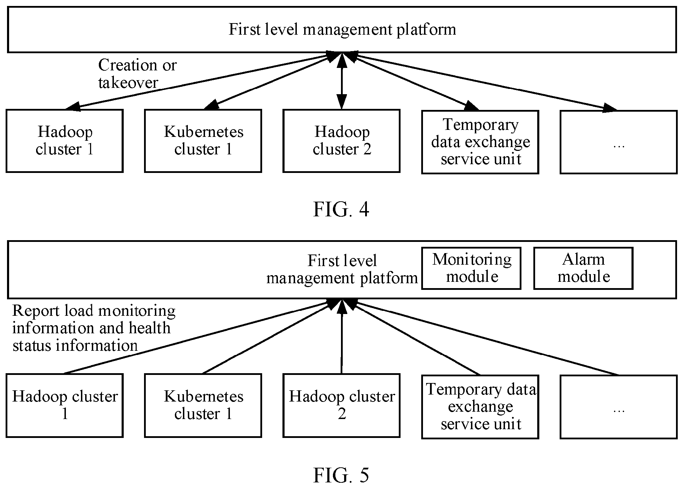

FIG. 4 is a diagram of another computing resource management method according to an embodiment of this application. In an example shown in FIG. 4, after a user establishes a first level management platform, the first level management platform may create subsystems. For example, the first level management platform creates a Hadoop cluster 1, a Kubernetes cluster 1, a Hadoop cluster 2, and a temporary data exchange service unit.

In another example shown in FIG. 4, after the user establishes the first level management platform, the first level management platform may receive a takeover request of an existing computing resource cluster. For example, the first level management platform receives takeover requests sent by the Hadoop cluster 1, the Kubernetes cluster 1, and the Hadoop cluster 2, and takes over the existing computing resource clusters.

In this embodiment of this application, the first level management platform may create the Hadoop cluster or the Kubernetes cluster for unified management, and may also receive a takeover request sent by a created computing resource cluster, to improve management effect of different computing resource clusters.

In a possible implementation, the first level management platform receives load monitoring information sent by the second level management platform, where the load monitoring information includes one or more of the following: central processing unit utilization, memory utilization, and disk utilization. The first level management platform receives health status information sent by the second level management platform, where the health status information is that, for example, a central processing unit is overloaded or the memory utilization is excessively high.

FIG. 5 is a diagram of another computing resource management method according to an embodiment of this application. In an example shown in FIG. 5, a first level management platform receives load monitoring information and health status information that are sent by a Hadoop cluster 1, a Kubernetes cluster 1, a Hadoop cluster 2, and a temporary data exchange service unit. For example, a Hadoop cluster management platform of the Hadoop cluster 1 reports to the first level management platform that central processing unit utilization is 82%.

In the example shown in FIG. 5, each subsystem of the first level management platform periodically reports the load monitoring information and the health status information to the first level management platform, and the first level management platform processes the information reported by each subsystem. For example, the first level management platform performs alarm processing based on the load monitoring information reported by the management platform of the Hadoop cluster 1. When the central processing unit utilization reported by the Hadoop cluster management platform of the Hadoop cluster 1 exceeds 80%, the first level management platform performs central processing unit overload alarm processing.

In a possible implementation, the first level management platform receives a scale-out request sent by a second level management platform of a first cluster, where the scale-out request is used to request the first level management platform to add a computing resource of the first cluster.

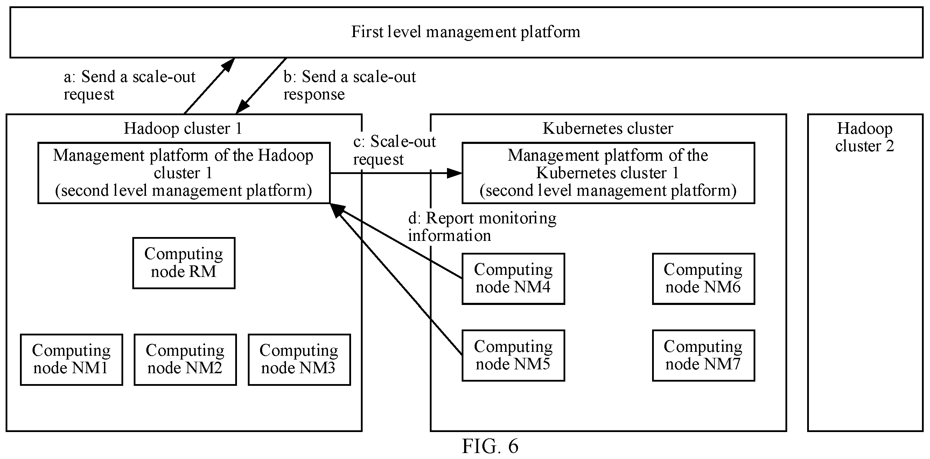

FIG. 6 is a diagram of another computing resource management method according to an embodiment of this application. In step a of an example shown in FIG. 6, a management platform of a Hadoop cluster 1 sends a scale-out request to a first level management platform based on a cluster load status, where the scale-out request is used to request to scale out a computing resource of the Hadoop cluster.

In a possible implementation, the first level management platform receives a scale-in request sent by a second level management platform of a first cluster, where the scale-in request is used to request the first level management platform to scale in a computing resource of the first cluster.

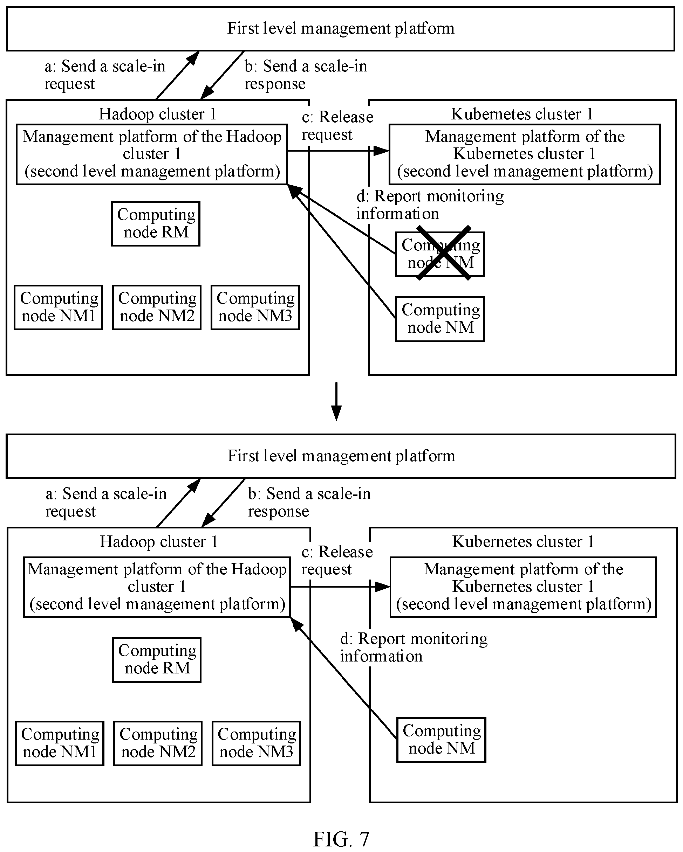

FIG. 7 is a diagram of another computing resource management method according to an embodiment of this application. In step a in an example shown in FIG. 7, a management platform of a Hadoop cluster 1 sends a scale-in request to a first level management platform, where the scale-in request is used to release a computing resource of the Hadoop cluster, and the scale-in request includes a computing resource capacity requested to be scaled in.

202: The first level management platform allocates a computing resource of the second cluster to the first computing task based on the scale-out request, and generates a scale-out response.

After the first level management platform receives the scale-out request sent by the second level management platform, the first level management platform allocates the computing resource of the second cluster to the first computing task based on the scale-out request, and generates the scale-out response. The scale-out response indicates the first cluster to make a request for adding a computing resource from the second cluster. Specifically, the first level management platform generates the scale-out response based on the scale-out request and a resource scaling policy, where the resource scaling policy indicates a scale-out rule and a scale-in rule of the computing resource cluster.

Still refer to FIG. 3. In step 2 of the example shown in FIG. 3, after receiving the computing resource request sent by the management platform of the Hadoop cluster 1, the unified operation and maintenance platform determines a computing resource response based on the computing resource request and the resource scaling policy. The computing resource response indicates the Hadoop cluster 1 to make a request for adding or releasing a computing resource from a Kubernetes cluster 1, the unified operation and maintenance platform sends the computing resource response to the Hadoop cluster 1.

In this embodiment of this application, the first level management platform may configure the resource scaling policy. Specifically, the first level management platform may configure an identifier of the second cluster that can be used by the first cluster and a use priority. The first level management platform may also configure scaling conditions for the resource scaling policy. The scaling conditions include time-based scaling, load-based scaling, and immediate scaling.

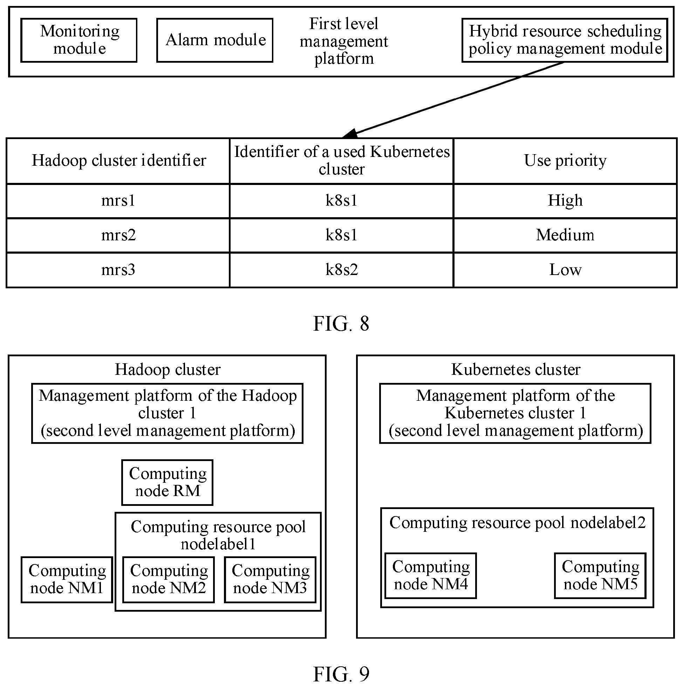

FIG. 8 is a diagram of a resource scaling policy according to an embodiment of this application. In an example shown in FIG. 8, the first level management platform may configure identifiers of Kubernetes clusters that can be used by different Hadoop clusters and use priorities. For example, a Hadoop cluster mrs1 may use a computing resource of a Kubernetes cluster K8s1, and a priority of using the computing resource is high. A Hadoop cluster mrs2 may also use a computing resource of the Kubernetes cluster K8s1, and a priority of using the computing resource is medium. A Hadoop cluster mrs3 may use a computing resource of a Kubernetes cluster K8s2, and a priority of using the computing resource is low.

In a possible implementation, after the first level management platform receives the scale-out request sent by the second level management platform of the first cluster, the first level management platform sends the scale-out response to the second level management platform of the first cluster based on the scale-out request and the resource scaling policy. The scale-out response indicates the first cluster to make a request for scaling out a computing resource from the second cluster.

Specifically, in a process in which the first level management platform sends the scale-out response to the second level management platform of the first cluster based on the scale-out request and the resource scaling policy, the first level management platform obtains a remaining computing resource capacity of the second cluster, and determines the scale-out response based on the scale-out request, the resource scaling policy, and the remaining computing resource capacity, where the scale-out response includes a computing resource that can be applied for. The first level management platform sends the scale-out response to the second level management platform of the first cluster.

Still refer to FIG. 6. In step b in the example shown in FIG. 6, after the first level management platform receives the scale-out request sent by the management platform of the Hadoop cluster 1, the first level management platform sends a scale-out response to the management platform of the Hadoop cluster 1 based on a remaining computing resource capacity of a Kubernetes cluster and the resource scaling policy.

In the example shown in FIG. 6, after the first level management platform obtains the remaining computing resource capacity of the Kubernetes cluster, if the remaining computing resource capacity does not meet a computing resource capacity needed by the Hadoop cluster 1, the first level management platform may require a Hadoop cluster 2 to release an occupied computing resource of the Kubernetes cluster, where the Hadoop cluster 2 is a computing resource cluster whose priority is lower than that of the Hadoop cluster 1.

In this embodiment of this application, the first level management platform may send the scale-out response to the Hadoop cluster based on the scale-out request sent by the management platform of the Hadoop cluster, to indicate the Hadoop cluster to scale out the computing resource from the Kubernetes cluster, so that the computing resource of the Hadoop cluster is scaled out, and computing resource utilization of the Kubernetes cluster is improved.

In a possible implementation, after the first level management platform receives the scale-in request sent by the second level management platform of the first cluster, the first level management platform sends a scale-in response to the second level management platform of the first cluster based on the scale-in request and the resource scaling policy. The scale-in response indicates the first cluster to make a request for releasing a computing resource from the second cluster.

Specifically, in a process in which the first level management platform sends the scale-in response to the second level management platform of the first cluster based on the scale-in request and the resource scaling policy, the first level management platform determines a scale-in computing resource capacity based on the scale-in request, and generates the scale-in response based on the scale-in computing resource capacity and the resource scaling policy. The scale-in response includes scale-in information of the second cluster that needs to be scaled in, and the scale-in information includes a name and an IP address of a scale-in computing node. The first level management platform sends the scale-in response to the second level management platform of the first cluster.

Still refer to FIG. 7. In step b in the example shown in FIG. 7, after the first level management platform receives the scale-in request sent by the management platform of the Hadoop cluster 1, the first level management platform sends a scale-in response to the management platform of the Hadoop cluster 1 based on the scale-in request and the resource scaling policy.

In the example shown in FIG. 7, after determining, based on the scale-in request of the Hadoop cluster 1, a quantity of computing resources that need to be scaled in, the first level management platform determines the scale-in response according to the resource scaling policy. The scale-in response includes a Kubernetes cluster for scale-in and scale-in information, and the scale-in information includes a name and an IP address of a container in the Kubernetes cluster. The first level management platform sends the scale-in response to the management platform of the Hadoop cluster 1.

In this embodiment of this application, the first level management platform may send the scale-in response to the Hadoop cluster based on the scale-in request sent by the management platform of the Hadoop cluster, to indicate the Hadoop cluster make a request for releasing the computing resource from the Kubernetes cluster, so that the scaled out computing resource of the Kubernetes cluster is released in time, and computing resource utilization efficiency of the Kubernetes cluster is improved.

203: The first level management platform sends the scale-out response to the second level management platform of the first cluster, where the scale-out response indicates the first cluster to request a computing resource from the second cluster.

After generating the scale-out response, the first level management platform sends the scale-out response to the second level management platform of the first cluster, where the computing resource response indicates the first cluster to make a request for adding a computing resource from the second cluster.

Still refer to FIG. 3. In step 3 of the example shown in FIG. 3, after the management platform of the Hadoop cluster 1 receives the computing resource response sent by the first level management platform, the Hadoop cluster 1 sends a computing resource scale-out or release request to the Kubernetes cluster. The computing resource scale-out request is used to request to use a computing resource in the Kubernetes cluster, and the computing resource release request is used to request to release the computing resource in the Kubernetes cluster.

After the second level management platform of the first cluster receives the scale-out response sent by the first level management platform, the second level management platform of the first cluster makes, based on the scale-out response, a request for using a computing resource from the second cluster. Specifically, the second level management platform of the first cluster sends the computing resource scale-out request to a second level management platform of the second cluster based on the scale-out response. The computing resource scale-out request is used to request to use the computing resource of the second cluster.

Still refer to FIG. 6. In step c of the example shown in FIG. 6, after the management platform of the Hadoop cluster 1 receives the scale-out response sent by the first level management platform, the Hadoop cluster 1 sends a computing resource scale-out request to the Kubernetes cluster. The computing resource scale-out request is used to request to use a computing resource in the Kubernetes cluster.

In a possible implementation, after generating the scale-in response, the first level management platform sends the scale-in response to the second level management platform of the first cluster, where the scale-in response indicates the first cluster to make a request for releasing a computing resource from the second cluster. After the second level management platform of the first cluster receives the scale-in response sent by the first level management platform, the second level management platform of the first cluster makes a request for releasing the computing resource from the second cluster.

Still refer to FIG. 7. In step c of the example shown in FIG. 7, after the management platform of the Hadoop cluster 1 receives the scale-in response sent by the first level management platform, the Hadoop cluster 1 sends a computing resource release request to the Kubernetes cluster. The computing resource release request is used to request to release a computing resource in the Kubernetes cluster.

In a possible implementation, the second level management platform of the first cluster receives node monitoring information sent by computing nodes in the second cluster, where the computing nodes in the second cluster are computing resources scaled out by the first cluster from the second cluster. A computing node scaled out from the second cluster may directly send the node monitoring information to the second level management platform of the first cluster. The node monitoring information includes one or more of the following: central processing unit utilization, memory utilization, and disk utilization.

Still refer to FIG. 3. In step 4 of the example shown in FIG. 3, after the computing resource scale-out request succeeds, a computing node NM4 and a computing node NM5 in the Kubernetes cluster are newly scaled-out computing resources in the Hadoop cluster 1. The computing node NM4 and the computing node NM5 in the Kubernetes cluster may directly send the node monitoring information to the management platform of the Hadoop cluster 1.

Still refer to FIG. 6. In step d of the example shown in FIG. 6, the Hadoop cluster 1 sends a computing resource scale-out request to the Kubernetes cluster. After the computing resource scale-out request succeeds, the Hadoop cluster 1 executes a computing task by using the computing resource of the Kubernetes cluster. For example: The Hadoop cluster 1 executes the computing task by using a computing node NM4 and a computing node NM5 in the Kubernetes cluster.

In the example shown in FIG. 6, the computing node in the Kubernetes cluster sends the node monitoring information to the management platform of the Hadoop cluster 1. For example, the computing node NM4 and the computing node NM5 in the Kubernetes cluster execute the computing task and send the node monitoring information to the management platform of the Hadoop cluster 1. The node monitoring information includes central processing unit utilization, memory utilization, and disk utilization of the computing node.

In this embodiment of this application, computing nodes in the computing resource cluster may be allocated to different computing resource pools, and the computing resource cluster may allocate computing tasks based on computing resource pools. In this embodiment of this application, the first cluster may separately add, as an independent computing resource pool, a computing node that is scaled out from the second cluster.

FIG. 9 is a diagram of computing resource pool division according to an embodiment of this application. In an example shown in FIG. 9, after the Hadoop cluster makes a request for scaling out a computing resource from the Kubernetes cluster, the Hadoop cluster has a planned computing resource pool NodeLabel1, and the computing resource pool NodeLabel1 includes a computing node NM2 and a computing node NM3.

In the example shown in FIG. 9, to avoid a case in which a computing node that is scaled out from the Kubernetes cluster is directly added to the computing resource pool NodeLabel1 and consequently a computing task performed on the NodeLabel1 is affected, the Hadoop cluster 1 separately adds the compute node that is scaled out from the Kubernetes cluster to a computing resource pool NodeLabel2, and the computing resource pool NodeLabel2 includes the computing node NM4 and the computing node NM5.

204: Execute the first computing task based on the first cluster and the second cluster.

A computing resource system executes the first computing task based on the first cluster and the second cluster. The first computing task may be one or more computing tasks sent by one or more service systems. The service system includes one or more systems: a large-scale dataset computing service MapReduce, a computing engine spark, a distributed processing engine flink, and a computing engine tez service system.

Specifically, after the first cluster receives the first computing task sent by the service system, the first cluster determines, according to the resource scheduling policy, the computing resource for executing the computing task. The computing resource includes the computing resource in the first cluster and the computing resource in the second cluster, and the resource scheduling policy includes one or more of the following: a default resource pool policy, a random policy, a round robin policy, a maximum available resource policy, a priority policy, and a heuristic policy.

The following specifically describes several resource scheduling policies provided in embodiments of this application.

The default (default) resource pool policy means that when an application program does not specify a computing resource pool to execute the computing task, a default computing resource pool is used to execute the computing task.

The random (random) policy means that if an application program does not specify a computing resource pool to execute the computing task, a resource pool is randomly selected, for scheduling, from a plurality of computing resource pools bound to a task queue.

The round robin (round robin) policy means that if an application program does not specify a computing resource pool to execute the computing task, a scheduling request is allocated, for execution, to a plurality of computing resource pools in a round robin manner.

The maximum available resource policy (DRF_MAX_AVAIL) means that if an application program does not specify a computing resource pool to execute the computing task, a computing resource pool with a largest quantity of remaining primary resources is selected, for scheduling, from current computing resource pools.

The priority (priority) policy means that if an application program does not specify a computing resource pool to execute the computing task, different weights are allocated to priorities of computing resource pools, and the computing resource pools are allocated based on the weights. A computing resource pool with a larger weight is more likely to be selected.

The heuristic (heuristic) policy means that if an application program does not specify a computing resource pool to execute the computing task, a time sequence-based deep learning prediction model (temporalfusiontransformer) is used to predict, based on historical computing resource usage, a resource pool that may be idle in the future.

A customized (customised) policy means that a user may select a resource pool in a customized manner based on a service requirement of the user. A multi-resource pool selection plug-in may be developed for a computing device, and a computing resource pool is selected for the computing task according to a customized multi-computing resource pool selection policy.

In this embodiment of this application, after receiving a single first computing task sent by the service system, the first cluster may perform cross-computing resource cluster or cross-computing resource pool scheduling on the single first computing task. Specifically, the computing resource system allocates, based on whether a computing resource pool is specified for the computing task, the computing task to task queues corresponding to different computing resource pools. Different task queues are bound to one or more different computing resource pools.

In a possible implementation, when one task queue is bound to two computing resource pools that are located in different computing resource clusters, a first computing task in the task queue may be also run in different computing resource clusters.

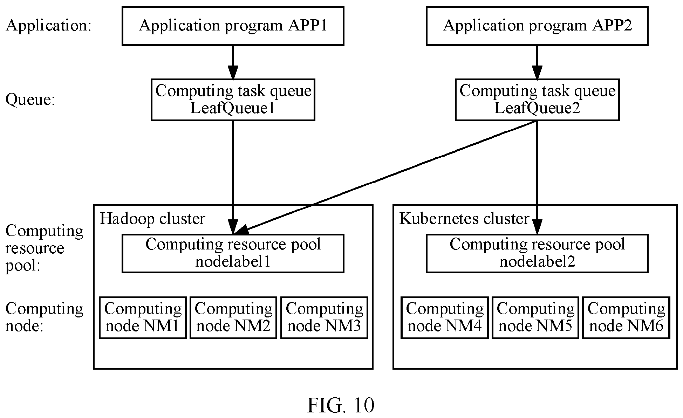

FIG. 10 is a diagram of allocating a computing task queue to a computing task according to an embodiment of this application. In an example shown in FIG. 10, the computing resource system receives a computing task 1 from an application program App1, and the computing resource system submits the computing task 1 to a computing task queue LeafQueue1. Because the computing task queue LeafQueue1 is bound only to the computing resource pool NodeLabel1, the application program App1 runs the computing task 1 on the computing resource pool NodeLabel1.

In another example shown in FIG. 10, the computing resource system receives a computing task 2 from an application program App 2. Because the application program App 2 does not specify a computing resource pool for running the computing task 2, the computing resource system submits the computing task 2 to a computing task queue LeafQueue2, and the computing task queue LeafQueue2 is bound to two computing resource pools NodeLabel1 and NodeLabel2. Therefore, the computing task queue LeafQueue2 supports a capacity of cross-resource pool scheduling, the application App2 runs the computing task on the computing resource pool NodeLabel1 and the computing resource pool NodeLabel2.

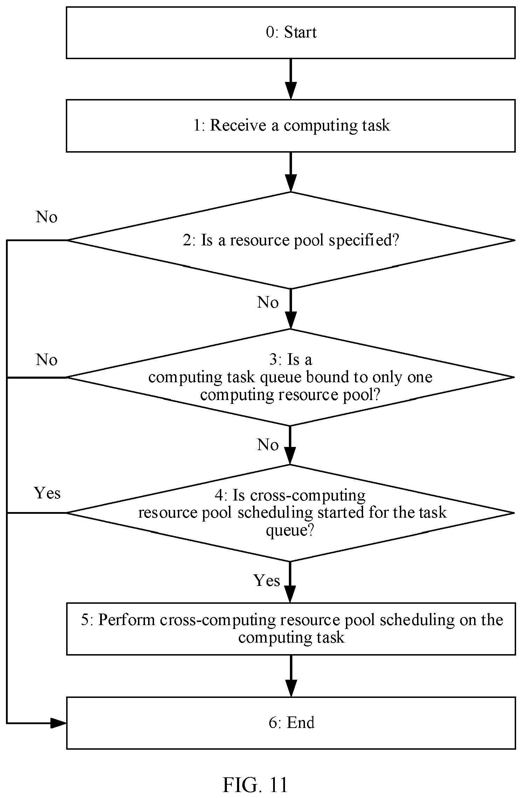

FIG. 11 is a schematic flowchart of cross-computing resource pool scheduling according to an embodiment of this application. In an example shown in FIG. 11, after receiving a computing task sent by an application program, the computing resource cluster determines whether a computing resource pool is specified for the computing task. If the computing task has a specified computing resource pool, the computing resource cluster cannot perform cross-computing resource pool scheduling on the computing task.

In the example shown in FIG. 11, if no computing resource pool is specified for the computing task, the computing resource cluster continues determining whether a computing task queue in which the computing task is located is bound to only one computing resource pool. If the computing task queue in which the computing task is located is bound to only one computing resource pool, the computing resource cluster cannot perform cross-computing resource pool scheduling on the computing task.

In the example shown in FIG. 11, when the computing task queue in which the computing task is located is bound to a plurality of computing resource pools, and cross-computing resource pool scheduling is started for the computing task queue, the computing resource cluster may perform cross-computing resource pool scheduling on the computing task.

In a possible implementation, the computing resource cluster corresponding to the second level management platform stores, in the temporary data exchange service unit, temporary data generated during execution of the computing task. In other words, the first cluster and the second cluster may store, in the temporary data exchange service unit, the temporary data generated during the execution of the computing task. For example, the temporary data exchange service unit may store temporary data generated by the Hadoop cluster and the Kubernetes cluster, to avoid dependency of the Kubernetes cluster on a local disk.

Still refer to FIG. 3. In step 5 of the example shown in FIG. 3, the Kubernetes cluster stores, in the temporary data exchange service unit, the temporary data generated during the execution of the computing task, to avoid adding local storage to the Kubernetes cluster, and avoid the dependency of the Kubernetes cluster on the local disk.

In this embodiment of this application, the computing resource system stores, by using the temporary data exchange service unit, temporary data generated by different computing resource clusters, to avoid a case in which the computing resource cluster adds a local disk to store the temporary data, so as to reduce costs of the computing resource cluster.

It can be learned from the foregoing embodiments that, in embodiments of this application, the computing device cluster manages different types of computing resource clusters by using a two-level computing resource system. The first level management platform may simultaneously manage a plurality of computing resource clusters, a plurality of first clusters may share a computing resource of the second cluster, so that effect of computing resource management across different computing resource clusters is improved.

The foregoing describes the computing resource management method provided in embodiments of this application. The following describes a computing resource management apparatus provided in embodiments of this application.

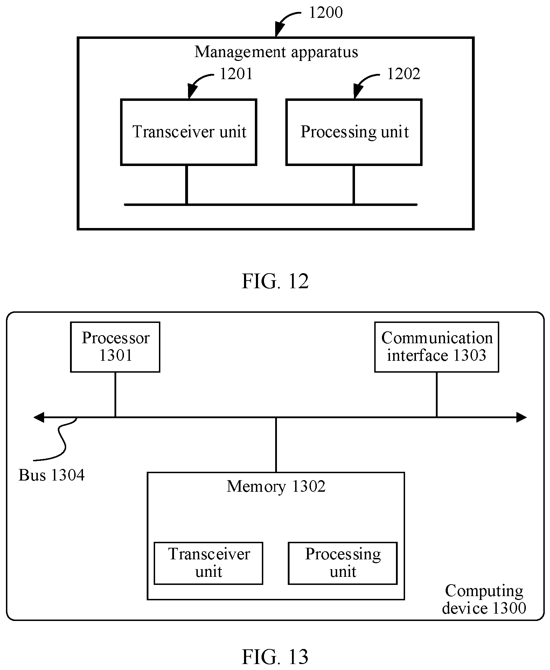

FIG. 12 is a diagram of a computing resource management apparatus according to an embodiment of this application. In an example shown in FIG. 12, the computing resource management apparatus 1200 includes a transceiver unit 1201 and a processing unit 1202.

In a possible implementation, the management apparatus 1200 is configured to implement steps performed by the first level management platform of the computing resource system in the foregoing embodiments. Details are as follows.

The transceiver unit 1201 is configured to receive a scale-out request sent by a second level management platform of a first cluster, where the scale-out request is used to request to add a computing resource needed for executing a first computing task. The processing unit 1202 is configured to allocate a computing resource in a second cluster to the first computing task based on the scale-out request. The transceiver unit 1201 is further configured to send a scale-out response to the second level management platform of the first cluster, where the scale-out response indicates the first cluster to make a request for adding a computing resource from the second cluster, and the first cluster and the second cluster are different types of computing resource clusters.

In a possible implementation, the computing resource cluster includes a Hadoop cluster and a container orchestration engine Kubernetes cluster.

In a possible implementation, the processing unit 1202 is specifically configured to obtain a remaining computing resource capacity of the second cluster; and determine the scale-out response based on the scale-out request, a resource scaling policy, and the remaining computing resource capacity, where the scale-out response indicates the first cluster to request a computing resource from the second cluster. The transceiver unit 1201 is specifically configured to send the scale-out response to the second level management platform of the first cluster.

In a possible implementation, the transceiver unit 1201 is further configured to receive a scale-in request sent by the second level management platform of the first cluster. The processing unit 1202 is further configured to determine a scale-in response based on the scale-in request and the resource scaling policy, where the scale-in response is used by the first cluster to make a request for releasing a computing resource from the second cluster. The transceiver unit 1201 is further configured to send the scale-in response to the second level management platform of the first cluster.

In a possible implementation, the transceiver unit 1201 is further configured to receive a takeover request of the second level management platform, or the processing unit 1202 is further configured to create a computing resource cluster corresponding to the second level management platform.

In a possible implementation, the first level management platform receives load monitoring information sent by the second level management platform, where the load monitoring information includes one or more of the following: central processing unit utilization, memory utilization, and disk utilization.

In another possible implementation, the management apparatus 1200 is configured to implement steps performed by the computing resource cluster corresponding to the second level management platform of the computing resource system in the foregoing embodiments. Details are as follows.

The transceiver unit 1201 is configured to send a scale-out request to a first level management platform, where the scale-out request is used to request to add a computing resource needed for executing a first computing task. The transceiver unit 1201 is further configured to receive a scale-out response sent by the first level management platform, where the scale-out response indicates a first cluster to make a request for adding a computing resource from a second cluster, and the first cluster and the second cluster are different types of computing resource clusters.

In a possible implementation, the computing resource system further includes a temporary data exchange service unit, and the transceiver unit 1201 is further configured to store, in the temporary data exchange service unit, temporary data generated during execution of the first computing task.

In a possible implementation, the transceiver unit 1201 is further configured to receive node monitoring information sent by a computing node in the second cluster, where the node monitoring information includes one or more of the following: central processing unit utilization, memory utilization, and disk utilization.

In a possible implementation, the processing unit 1202 is configured to determine, according to a resource scheduling policy, a computing resource for executing the first computing task, where the computing resource includes a computing resource in the first cluster and a computing resource in the second cluster, and the resource scheduling policy includes one or more of the following: a default resource pool policy, a random policy, a round robin policy, a maximum available resource policy, a priority policy, and a heuristic policy.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of program to be invoked by a processing element of the apparatus to perform a function of the unit. In addition, all or some of the units may be integrated, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

It should be noted that, for ease of description, the foregoing method embodiments are described as a series of action combinations. However, a person skilled in the art should learn that this application is not limited by the described action sequence. In addition, a person skilled in the art should also learn that embodiments described in this specification are all embodiments, and actions involved are not necessarily required in this application.

Another appropriate step combination that can be figured out by a person skilled in the art based on the foregoing described content also falls within the protection scope of this application. In addition, a person skilled in the art should also learn that embodiments described in this specification are all embodiments, and actions involved are not necessarily required in this application.

FIG. 13 is a diagram of a structure of a computing device according to an embodiment of this application. As shown in FIG. 13, the computing device 1300 includes a processor 1301, a memory 1302, a communication interface 1303, and a bus 1304. The processor 1301, the memory 1302, and the communication interface 1303 are coupled through the bus (not marked in the figure). The memory 1302 stores instructions. When the execution instructions in the memory 1302 are executed, the computing device 1300 performs the method performed by the first level management platform or the computing resource cluster in the foregoing method embodiments.

The computing device 1300 may be one or more integrated circuits configured to implement the foregoing method, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. In still another example, the units may be integrated and implemented in a form of a system-on-a-chip (system-on-a-chip, SoC).

The processor 1301 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The memory 1302 may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 1302 stores an executable program code, and the processor 1301 executes the executable program code to separately implement functions of the foregoing transceiver unit and processing unit, to implement the foregoing computing resource management method. In other words, the memory 1302 stores instructions used to perform the computing resource management method.

The communication interface 1303 uses a transceiver module, for example, but not limited to, a network interface card or a transceiver, to implement communication between the computing device 1300 and another device or a communication network.

The bus 1304 may further include a power bus, a control bus, a status signal bus, and the like, in addition to a data bus. The bus may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. The bus may include an address bus, a data bus, a control bus, or the like.

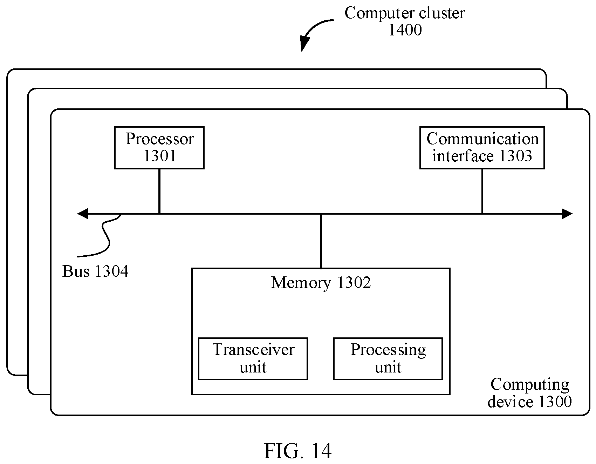

FIG. 14 is a diagram of a computing device cluster according to an embodiment of this application. As shown in FIG. 14, the computing device cluster 1400 includes at least one computing device 1300.

As shown in FIG. 14, the computing device cluster 1400 includes at least one computing device 1300. A memory 1302 in the one or more computing devices 1300 in the computing device cluster 1400 may store same instructions for performing the foregoing computing resource management method.

In some possible implementations, the memory 1302 in the one or more computing devices 1300 in the computing device cluster 1400 may also separately store some instructions used to perform the computing resource management method. In other words, a combination of the one or more computing devices 1300 may jointly execute instructions used to perform the computing resource management method.

It should be noted that memories 1302 in different computing devices 1300 in the computing device cluster 1400 may store different instructions respectively used to perform some functions of the computing resource management apparatus. In other words, the instructions stored in the memories 1302 in different computing devices 1300 may be used to implement functions of one or more modules in a transceiver unit and a processing unit.

In some possible implementations, the one or more computing devices 1300 in the computing device cluster 1400 may be connected through a network. The network may be a wide area network, a local area network, or the like.

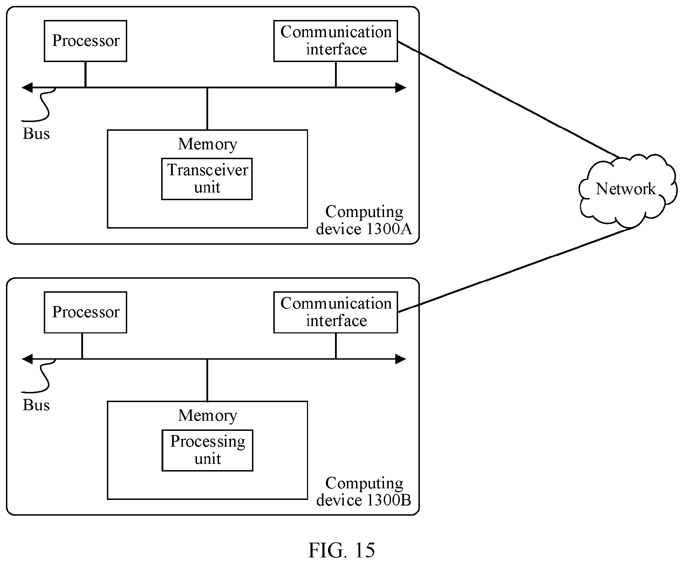

FIG. 15 is a diagram in which computer devices in a computer cluster are connected through a network according to an embodiment of this application. As shown in FIG. 15, two computing devices 1300A and 1300B are connected through a network. Specifically, each computing device is connected to the network through a communication interface of the computing device.

In a possible implementation, a memory in the computing device 1300A stores instructions for performing a function of a transceiver module. In addition, a memory in the computing device 1300B stores instructions for performing a function of a processing module.

It should be understood that a function of the computing device 1300A shown in FIG. 15 may alternatively be implemented by a plurality of computing devices. Similarly, a function of the computing device 1300B may alternatively be implemented by the plurality of computing devices.

In another embodiment of this application, a computer-readable storage medium is further provided. The computer-readable storage medium stores computer-executable instructions. When a processor of a device executes the computer-executable instructions, the device performs the method performed by the computing resource cluster corresponding to the first level management platform or the second level management platform in the foregoing method embodiments.

In another embodiment of this application, a computer program product is further provided. The computer program product includes computer-executable instructions, and the computer-executable instructions are stored in a computer-readable storage medium. When the processor of the device executes the computer-executable instructions, the device performs the method performed by the computing resource cluster corresponding to the first level management platform or the second level management platform in the foregoing method embodiments.

It may be clearly understood by a person skilled in the art that, for convenient and brief description, for detailed working processes of the foregoing systems, apparatuses, and units, refer to corresponding processes in the foregoing method embodiments. Details are not described herein again.

In the several embodiments provided in this application, it should be understood that the disclosed systems, apparatuses, and methods may be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A computing resource management method, applied to a first level management platform in a management system of a computing resource, wherein the computing resource is configured to execute a big data computing task, the computing resource comprises a plurality of computing resource clusters, the first level management platform is configured to manage the plurality of computing resource clusters, the plurality of computing resource clusters comprise a plurality of types of clusters, and the plurality of types of clusters comprise at least two of the following: a container cluster, a virtual machine cluster, and a physical machine cluster; the management system further comprises a second level management platform, the second level management platform is configured to manage a computing resource in each computing resource cluster, and the plurality of computing resource clusters comprise a first cluster and a second cluster; and the method comprises:
Receiving, by the first level management platform, a scale-out request sent by a second level management platform of the first cluster, wherein the scale-out request is used to request to add a computing resource needed for executing a first computing task; and
Allocating, by the first level management platform, a computing resource in the second cluster to the first computing task based on the scale-out request, and sending a scale-out response to the second level management platform of the first cluster, wherein the scale-out response indicates the first cluster to make a request for adding a computing resource from the second cluster, and the first cluster and the second cluster are different types of computing resource clusters.

2. The method according to claim 1, wherein the computing resource cluster comprises a Hadoop cluster and a container orchestration engine Kubernetes cluster.

3. The method according to claim 1 or 2, wherein the allocating, by the first level management platform, a computing resource in the second cluster to the first computing task based on the scale-out request, and sending a scale-out response to the second level management platform of the first cluster comprises:
Obtaining, by the first level management platform, a remaining computing resource capacity of the second cluster;
determining, by the first level management platform, the scale-out response based on the scale-out request, a resource scaling policy, and the remaining computing resource capacity, wherein the scale-out response indicates the first cluster to request a computing resource from the second cluster; and
sending, by the first level management platform, the scale-out response to the second level management platform of the first cluster.

4. The method according to any one of claims 1 to 3, wherein the method further comprises:
receiving, by the first level management platform, a scale-in request sent by the second level management platform of the first cluster;
determining, by the first level management platform, a scale-in response based on the scale-in request and the resource scaling policy, wherein the scale-in response is used by the first cluster to make a request for releasing a computing resource from the second cluster; and
sending, by the first level management platform, the scale-in response to the second level management platform of the first cluster.

5. The method according to any one of claims 1 to 4, wherein the method further comprises:
receiving, by the first level management platform, a takeover request of the second level management platform; or
creating, by the first level management platform, a computing resource cluster corresponding to the second level management platform.

6. The method according to any one of claims 1 to 5, wherein the method further comprises:
receiving, by the first level management platform, load monitoring information sent by the second level management platform, wherein the load monitoring information comprises one or more of the following: central processing unit utilization, memory utilization, and disk utilization.

7. A computing resource management method, applied to a second level management platform in a management system of a computing resource, wherein the computing resource comprises a plurality of computing resource clusters, the second level management platform is configured to manage a computing resource in each computing resource cluster, the plurality of computing resource clusters comprise a plurality of types of clusters, and the plurality of types of clusters comprise at least two of the following: a container cluster, a virtual machine cluster, and a physical machine cluster; the management system further comprises a first level management platform, the first level management platform is configured to manage the plurality of computing resource clusters, and the plurality of computing resource clusters comprise a first cluster and a second cluster; and the method comprises:
sending, by a second level management platform of the first cluster, a scale-out request to the first level management platform, wherein the scale-out request is used to request to add a computing resource needed for executing a first computing task; and
receiving, by the second level management platform of the first cluster, a scale-out response sent by the first level management platform, wherein the scale-out response indicates the first cluster to make a request for adding a computing resource from the second cluster, and the first cluster and the second cluster are different types of computing resource clusters.

8. The method according to claim 7, wherein the system of the computing resource further comprises a temporary data exchange service unit, and the method further comprises:
storing, by the computing resource cluster, temporary data generated during execution of the first computing task into the temporary data exchange service unit.

9. The method according to claim 7 or 8, wherein the method further comprises:
receiving, by the second level management platform of the first cluster, node monitoring information sent by a computing node in the second cluster, wherein the node monitoring information comprises one or more of the following: central processing unit utilization, memory utilization, and disk utilization.

10. The method according to any one of claims 7 to 9, wherein the method comprises:
determining, by the first cluster according to a resource scheduling policy, a computing resource for executing the first computing task, wherein the computing resource comprises a computing resource in the first cluster and a computing resource in the second cluster, and the resource scheduling policy comprises one or more of the following: a default resource pool policy, a random policy, a round robin policy, a maximum available resource policy, a priority policy, and a heuristic policy.

11. A computing resource management apparatus, used in a first level management platform in a management system of a computing resource, wherein the computing resource is configured to execute a big data computing task, the computing resource comprises a plurality of computing resource clusters, the first level management platform is configured to manage the plurality of computing resource clusters, the plurality of computing resource clusters comprise a plurality of types of clusters, and the plurality of types of clusters comprise at least two of the following: a container cluster, a virtual machine cluster, and a physical machine cluster; the management system further comprises a second level management platform, the second level management platform is configured to manage a computing resource in each computing resource cluster, and the plurality of computing resource clusters comprise a first cluster and a second cluster; and the management apparatus comprises:
a transceiver unit, configured to receive a scale-out request sent by a second level management platform of the first cluster, wherein the scale-out request is used to request to add a computing resource needed for executing a first computing task; and
a processing unit, configured to allocate a computing resource in the second cluster to the first computing task based on the scale-out request, wherein the transceiver unit is further configured to send a scale-out response to the second level management platform of the first cluster, wherein the scale-out response indicates the first cluster to make a request for adding a computing resource from the second cluster, and the first cluster and the second cluster are different types of computing resource clusters.

12. The apparatus according to claim 11, wherein the computing resource cluster comprises a Hadoop cluster and a container orchestration engine Kubernetes cluster.

13. The apparatus according to claim 11 or 12, wherein the processing unit is specifically configured to:
obtain a remaining computing resource capacity of the second cluster; and
determine the scale-out response based on the scale-out request, a resource scaling policy, and the remaining computing resource capacity, wherein the scale-out response indicates the first cluster to request a computing resource from the second cluster; and
the transceiver unit is specifically configured to send the scale-out response to the second level management platform of the first cluster.

14. The apparatus according to any one of claims 11 to 13, wherein the transceiver unit is further configured to:
receive a scale-in request sent by the second level management platform of the first cluster;
the processing unit is further configured to determine a scale-in response based on the scale-in request and the resource scaling policy, wherein the scale-in response is used by the first cluster to make a request for releasing a computing resource from the second cluster; and
the transceiver unit is further configured to send the scale-in response to the second level management platform of the first cluster.

15. The apparatus according to any one of claims 11 to 14, wherein the transceiver unit is further configured to:
receive a takeover request of the second level management platform; or
the processing unit is further configured to create a computing resource cluster corresponding to the second level management platform.

16. The apparatus according to any one of claims 11 to 15, wherein the first level management platform is further configured to receive load monitoring information sent by the second level management platform, wherein the load monitoring information comprises one or more of the following: central processing unit utilization, memory utilization, and disk utilization.

17. A computing resource management apparatus, used in a second level management platform in a management system of a computing resource, wherein the computing resource comprises a plurality of computing resource clusters, the second level management platform is configured to manage a computing resource in each computing resource cluster, the plurality of computing resource clusters comprise a plurality of types of clusters, and the plurality of types of clusters comprise at least two of the following: a container cluster, a virtual machine cluster, and a physical machine cluster; the management system further comprises a first level management platform, the first level management platform is configured to manage the plurality of computing resource clusters, and the plurality of computing resource clusters comprise a first cluster and a second cluster; and the management apparatus comprises:
a transceiver unit, configured to send a scale-out request to the first level management platform, wherein the scale-out request is used to request to add a computing resource needed for executing a first computing task, wherein
the transceiver unit is further configured to receive a scale-out response sent by the first level management platform, wherein the scale-out response indicates the first cluster to make a request for adding a computing resource from the second cluster, and the first cluster and the second cluster are different types of computing resource clusters.

18. The apparatus according to claim 17, wherein the system of the computing resource further comprises a temporary data exchange service unit, and the transceiver unit is further configured to:
store temporary data generated during execution of the first computing task into the temporary data exchange service unit.

19. The apparatus according to claim 17 or 18, wherein the transceiver unit is further configured to:
receive node monitoring information sent by a computing node in the second cluster, wherein the node monitoring information comprises one or more of the following: central processing unit utilization, memory utilization, and disk utilization.

20. The apparatus according to any one of claims 17 to 19, wherein the management apparatus further comprises a processing unit, and the processing unit is configured to:
determine, according to a resource scheduling policy, a computing resource for executing the first computing task, wherein the computing resource comprises a computing resource in the first cluster and a computing resource in the second cluster, and the resource scheduling policy comprises one or more of the following: a default resource pool policy, a random policy, a round robin policy, a maximum available resource policy, a priority policy, and a heuristic policy.

21. A computing device cluster, comprising a processor, wherein the processor is coupled to a memory, the processor is configured to store instructions, and when the instructions are executed by the processor, the computing device cluster is enabled to perform the method according to any one of claims 1 to 6, or the computing device cluster is enabled to perform the method according to any one of claims 7 to 10.

22. A computer-readable storage medium, wherein the computer-readable storage medium stores instructions, and when the instructions are executed, a computer is enabled to perform the method according to any one of claims 1 to 6, or the computer is enabled to perform the method according to any one of claims 7 to 10.

23. A computer program product, wherein the computer program product comprises instructions, and when the instructions are executed, a computer is enabled to implement the method according to any one of claims 1 to 6, or the computer is enabled to implement the method according to any one of claims 7 to 10.
